(19) Europäisches Patentamt
European Patent Office
Office européen des brevets

(11) **EP 3 297 153 B1**

(12) **EUROPÄISCHE PATENTSCHRIFT**

(45) Veröffentlichungstag und Bekanntmachung des Hinweises auf die Patenterteilung:
**23.03.2022 Patentblatt 2022/12**

(51) Internationale Patentklassifikation (IPC):
**H02P 21/12** *(2016.01)*

(52) Gemeinsame Patentklassifikation (CPC):
**H02P 21/12**

(21) Anmeldenummer: **17190790.0**

(22) Anmeldetag: **13.09.2017**

(54) **VERFAHREN UND VORRICHTUNG ZUM BESTIMMEN EINER LÄUFERLAGE EINES LÄUFERS EINER ELEKTRONISCH KOMMUTIERTEN ELEKTRISCHEN MASCHINE**

METHOD AND DEVICE FOR DETERMINING A POSITION OF A ROTOR OF AN ELECTRONICALLY COMMUTATED ELECTRICAL MACHINE

PROCÉDÉ ET DISPOSITIF DE DÉTERMINATION D'UNE POSITION DE ROTOR D'UN ROTOR D'UNE MACHINE ÉLECTRIQUE À COMMUTATION ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.09.2016 DE 102016117258**

(43) Veröffentlichungstag der Anmeldung:
**21.03.2018 Patentblatt 2018/12**

(73) Patentinhaber: **Universität des Saarlandes 66123 Saarbrücken (DE)**

(72) Erfinder:
• **Grasso, Emanuele 66111 Saarbrücken (DE)**
• **Merl, Daniel 66809 Nalbach (DE)**
• **Nienhaus, Matthias 55232 Alzey (DE)**

(74) Vertreter: **Banse & Steglich Patentanwälte PartmbB Patentanwaltskanzlei Herzog-Heinrich-Straße 23 80336 München (DE)**

(56) Entgegenhaltungen:
DE-A1-102004 013 241    DE-A1-102009 028 746
DE-A1-102015 005 675    DE-C2- 3 348 465

• E Grasso ET AL: "Analyse des Direct-Flux-Observation-Verfahrens für feldorientiert ge- regelte PMSM Analysis of Direct Flux Observation for field oriented control PMSM", , 15. September 2015 (2015-09-15), XP055446619, Gefunden im Internet: URL:http://ieeexplore.ieee.org/ielx7/73484 73/7348474/07348494.pdf [gefunden am 2018-01-31]

**Beschreibung**

Technisches Gebiet

Die Erfindung betrifft elektronisch kommutierte elektrische Maschinen, und insbesondere Verfahren zur sensorlosen Erfassung einer Läuferlage einer elektrischen Maschine.

Technischer Hintergrund

Elektronisch kommutierte elektrische Maschinen, wie beispielsweise permanentmagneterregte elektrische Maschinen, Reluktanzmaschinen oder dergleichen, werden in der Regel durch eine feldorientierte Regelung angesteuert. Die feldorientierte Regelung sieht vor, abhängig von einer Ausrichtung eines Erregermagnetfelds ein Statormagnetfeld bereitzustellen, das mit dem Erregermagnetfeld zum Bereitstellen eines Motormoments wechselwirkt. Da das Erregermagnetfeld durch den Läufer generiert wird, hängt dessen Ausrichtung von der Läuferlage des Läufers der elektrischen Maschine ab. Für eine effiziente Ansteuerung der elektrischen Maschine mit einem sich bewegenden Läufer ist daher stets eine aktuelle Information über die Lage des Läufers notwendig.

Neben Positionssensoren, die beispielsweise eine Läuferlage mit Hilfe von Hall-Sensoren, GMR-Sensoren oder optischen Sensoren erfassen können, werden in der Praxis zusehends sensorlose Verfahren eingesetzt, die aus einer während des Betriebs der elektrischen Maschine messbaren elektrischen Größe die zu ermittelnde Läuferlage ableiten.

Insbesondere kann, wie aus der Druckschrift WO99/009645 A1 bekannt, eine Lageermittlungseinrichtung zur Bestimmung einer Rotordrehlage einer fremderregten elektrischen Maschine vorgesehen sein, wobei zur Ermittlung der Rotordrehlage eine Auswertung des Potenzials an einem Sternpunkt von im Stern verschalteten Phasenstränge der elektrischen Maschine erfolgt.

Weiterhin ist aus der Druckschrift WO 2007/073853 eine Vorrichtung und ein Verfahren zur Ermittlung der Drehlage eines Rotors einer im Stern verschalteten Polwicklungsphasenstränge aufweisenden elektrischen Maschine bekannt. Zur Ansteuerung der elektrischen Maschine werden Spannungsimpulse an wenigstens einen der Phasenstränge angelegt und zur Ermittlung der Drehlage des Rotors ein durch die Spannungsimpulse erzeugtes Sternpunktpotenzial ausgewertet. Die Drehlage des Rotors wird basierend auf einer Differenz zwischen zwei zeitlich versetzt erfassten Sternpunktpotenzialen ermittelt.

Aus der Druckschrift EP 2 732 546 B1 ist ein Verfahren zur Bestimmung der Drehlage eines Rotors einer elektrischen Maschine bekannt, bei der Phasenstränge in einer Sternpunktschaltung verschaltet sind. Es wird ein für die Drehlage des Rotors innerhalb einer halben magnetischen Periode repräsentatives Messsignal ermittelt. Das Messsignal wird als Differenz von Steigungen des Stromverlaufs zu zwei Messzeitpunkten, zu denen an Enden der Phasenstränge verschiedene Spannungen angelegt werden, bestimmt.

Die obigen Druckschriften betreffen dreiphasige fremderregte elektrische Maschinen, deren Phasenstränge in einer Sternpunktschaltung verschaltet sind, wobei ein Sternpunktpotential ausgewertet wird, um die Läuferlage zu bestimmen. Die Ermittlung der Läuferlage basierend auf einer Auswertung eines Sternpunktpotenzials führt in der Praxis insbesondere bei einer pulsweitenmodulierten Ansteuerung der Phasenstränge zu Messungenauigkeiten.

Zum einen ist das Sternpunktpotenzial aufgrund von elektromagnetischen Streufeldern und aufgrund des durch Kapazitäten in der Leistungselektronik und parasitär wirkenden Leitungsinduktivitäten ausgeprägten Einschwingverhaltens stark oberwellen- und rauschbehaftet. Zum anderen führt die insbesondere bei kleinen elektromagnetischen Antrieben geringe magnetische Anisotropie zu geringen Änderungen des Messsignals. Daher können die Messsignale bei Auswertung des Sternpunktpotenzials einen geringen Signal-Rausch-Abstand aufweisen. Spätestens dann, wenn aus dem Messsignal durch Differentiation auch Drehzahl und Beschleunigung des Läufers bestimmt werden sollen, ist dieses Verfahren zur Bestimmung der Läuferlage anderen Verfahren deutlich unterlegen.

Die Druckschrift E. Grasso et al., "Analysis of direct flux observation for field-oriented control PMSM", dtg Fachbericht 146, IKMT 2015, Seiten 122 bis 127 beschreibt ein Verfahren zum Ermitteln einer Läuferlage aus einer mit PWM-Signalen synchronisiert gemessenen Sternpunktspannung in einer elektrischen Maschine. Dabei wird ein angepasstes PWM-Signal benutzt, das die Motorphasen so ansteuert, dass lediglich die Sternpunktspannung zu messen ist, um die Läuferlage-abhängigen, relativen Induktivitätsabweichungen zu bestimmen. Dabei ist vorgesehen, eine Sternpunktspannung vor und nach einem Schaltvorgang zu messen und die Flussverkettung als Differenz der Sternpunktspannungen zu ermitteln. Mithilfe einer Clarke-Transformation können die Flussverkettungen in ein zweiphasiges Signal mit zueinander rechtwinklig angeordneten Komponenten umgewandelt werden, woraus sich der Lagewinkel ergibt.

Die Druckschrift DE 10 2004 013241 A1 offenbart ein Verfahren zum Starten eines sensorlosen, elektronisch kommutierbaren Gleichstrommotors, wobei eine Differenz zwischen einer Standpunktspannung und einer virtuellen Sternpunktspannung ausgewertet wird, um durch das Erkennen eines Einsetzens des Auftretens von induzierten Spannungen in den Phasensträngen auf ein Anlaufen des Elektromotors zu schließen.

Es ist Aufgabe der vorliegenden Erfindung, ein verbessertes Verfahren zum sensorlosen Bestimmen einer Läuferlage einer elektronisch kommutierten elektrischen Maschine zur Verfügung zu stellen, das insbesondere bei einem verrauschten Sternpunktpotenzial und bei geringem Signal-Rausch-Abstand eine für die Durchführung einer feldorientierten Ansteuerung der elektronisch kommutierten elektrischen Maschine brauchbare Angabe zur Läuferlage bereitstellt.

Offenbarung der Erfindung

Diese Aufgabe wird durch das Verfahren zum Bestimmen einer Läuferlage eines Läufers einer elektronisch kommutierten elektrischen Maschine gemäß Anspruch 1 sowie durch die Vorrichtung und das Motorsystem mit einer elektronisch kommutierten elektrischen Maschine gemäß den nebengeordneten Ansprüchen gelöst.
Weitere Ausgestaltungen sind in den abhängigen Ansprüchen angegeben.
→ Seite 4
Gemäß einem ersten Aspekt ist ein Verfahren zum sensorlosen Bestimmen einer Läuferlage einer elektronisch kommutierten elektrischen Maschine mit in Sternpunktschaltung verschalteten Phasensträngen vorgesehen, mit folgenden Schritten:

- Ansteuern der Phasenstränge der elektrischen Maschine mit Hilfe von getakteten Spannungen, um definierte Phasenspannungen an die Phasenstränge anzulegen, wobei sich Spannungen an den Phasensträngen zu bestimmten Schaltzeitpunkten sprunghaft ändern;
- für mindestens zwei der Phasenstränge, insbesondere für jeden der Phasenstränge, Bestimmen einer Sternpunktpotenzialangabe basierend auf einer ersten Integration für eine erste Zeitdauer vor dem Schaltzeitpunkt der Phasenspannung an dem betreffenden Phasenstrang und auf einer zweiten Integration für eine zweite Zeitdauer nach dem Schaltzeitpunkt der Phasenspannung an dem betreffenden Phasenstrang;
- Durchführen einer Transformation abhängig von den Sternpunktpotenzialangaben für jeden der Phasenstränge, um die Läuferlage zu erhalten.

Eine Idee des obigen Verfahrens besteht darin, ein von einem Sternpunktpotenzial abhängiges Messsignal während einer ersten Zeitdauer vor einem Schaltvorgang einer Phasenspannung an mindestens einem Phasenstrang der elektrischen Maschine und während einer zweiten Zeitdauer nach dem Schaltvorgang auszuwerten. Dabei wird das Messsignal über die erste Zeitdauer vor dem Schaltvorgang und über die zweite Zeitdauer nach dem Schaltvorgang integriert. Eine Differenz zwischen dem resultierenden Integrationswert nach der zweiten Integration und dem Integrationswert nach der ersten Integration entspricht einer Sternpunktpotenzialangabe des betreffenden Phasenstranges. Die Ermittlung der Sternpunktpotenzialangabe wird für zeitlich nah beieinanderliegende Schaltzeitpunkte von Schaltvorgängen, insbesondere bei aufeinander folgenden Schaltzeitpunkten an vorzugsweise jedem der Phasenstränge separat durchgeführt, um die phasenbezogenen Sternpunktpotenzialangaben zu erhalten, d.h. eine Angabe eines Sternpunktpotenzials für den betreffenden Phasenstrang.
Die Ermittlung der Sternpunktpotenzialangaben wird für diejenigen Schaltzeitpunkte von Schaltvorgängen durchgeführt, bei denen ausgehend von einem Schaltzustand, bei dem keiner der Phasenstränge an die Phasenspannung angeschlossen ist zu einem Schaltzustand, bei dem genau einer der Phasenstränge an die Phasenspannung angeschlossen ist, durchgeführt, so dass vorzugsweise nacheinander für jeden der Schaltvorgänge der Phasenstränge das Sternpunktpotenzial ermittelt wird.
Da sich die mit Hilfe der Integration ermittelten Messsignale im Wesentlichen linear zum Läuferlagevektor bzw. Gesamtflussvektor verhalten, kann das zur Ermittlung der Läuferlage bisher bekannte Verfahren verwendet werden. Die Sternpunktpotentialangaben können beispielsweise durch einfache Vektoraddition in eine elektrische Läuferlage umgerechnet werden, wobei die Länge der Vektoren jeweils durch die Sternpunktpotentialangabe und durch die Richtung des Magnetfelds bestimmt ist, das sich durch die Bestromung des der Sternpunktpotentialangabe zugeordneten Phasenstrangs ergibt.
Durch das obige Verfahren kann das Signalrauschen sowohl in dem Messsignal als auch in der daraus abgeleiteten Läuferlage erheblich geglättet werden, so dass die Verwendung des obigen Verfahrens auch für elektrische Maschinen mit geringer magnetischer Anisotropie eingesetzt werden kann.
Weiterhin ermöglicht das obige Verfahren sehr kurze Integrationszeitdauern, so dass das Messverfahren auch bei Tastverhältnissen der Pulsweitenmodulation eingesetzt werden kann, die sehr nahe an einem Tastverhältnis von 100% liegen. Somit ist die Ermittlung einer Läuferlage auch dann möglich, wenn die elektrische Maschine nahezu unter Volllast betrieben wird, so dass das Leistungspotenzial der elektrischen Maschine nahezu vollständig ausgeschöpft werden kann. In den herkömmlichen Verfahren zur Ermittlung der Läuferlage anhand des Sternpunktpotenzials ist es dagegen notwendig, nach dem Schaltzeitpunkt die Erfassung des Sternpunktpotenzials zu verzögern, um eine etwaige Schwingung des Sternpunktpotenzials abklingen zu lassen, bevor die Messung durchgeführt werden kann.
Somit ermöglicht das obige Verfahren zum Bestimmen einer Läuferlage eine rauscharme und damit präzise Bestimmung der Läuferlage, die sich für die Realisierung einer hochdynamischen Servoregelung ausgezeichnet eignet.

Typischer Weise sind elektronisch kommutierte elektrische Maschinen dreisträngig, d.h. mit drei separaten Phasensträngen aufgebaut. Hiervon kann in Richtung kleinerer und größerer Strangzahlen abgewichen werden. Bei elektromagnetisch symmetrischen elektronisch kommutierten elektrischen Maschinen in Sternschaltung kann bei Strangzahlen von drei und größer aufgrund der Symmetriebedingung auf die Bestimmung der Sternpunktpotenzialangabe jeweils eines Phasenstrangs verzichtet werden, da sich diese in diesem Fall aus den Sternpunktpotenzialangaben der übrigen Phasenstränge bestimmen lässt.

Weiterhin können die Phasenstränge jeweils mithilfe eines pulsweitenmodulierten Signals angesteuert werden. Da bei einem Tastverhältnis von nahezu 100% sich unter Umständen für einen Läuferlagebereich kein Schaltvorgang einer Phasenspannung ergibt, der für die Ermittlung der Sternpunkt-Potenzialangabe benötigt wird, kann eine Läuferlage bei einem Tastverhältnis von annähernd 100% in der Regel nicht zuverlässig ermittelt werden. Durch Verringern der ersten bzw. zweiten Zeitdauer kann jedoch das obige Verfahren für Tastverhältnisse sehr nahe an einem Tastverhältnis von 100% angewendet werden, wenn die erste bzw. zweite Zeitdauer entsprechend klein gewählt werden. Unter Umständen können die erste und die zweite Zeitdauer umso kleiner gewählt werden, je näher das Tastverhältnis an 100% liegt.

Insbesondere können die erste Zeitdauer und die zweite Zeitdauer abhängig von einem Tastverhältnis des pulsweitenmodulierten Signals gewählt werden.

Es kann vorgesehen sein, dass bei der ersten und der zweiten Integration eine Differenzspannung zwischen dem Sternpunktpotential der Sternpunktschaltung und einem virtuellen Sternpunktpotenzial einer virtuellen Sternpunktschaltung integriert wird, wobei insbesondere die virtuelle Sternpunktschaltung einer Sternpunktschaltung von identischen ohmschen Widerständen entspricht. Dies kann zur Anpassung des Messbereichs für das Sternpunktpotential dienen, so dass präzisere Messungen mit einer entsprechenden Messvorrichtung bei einem definierten und insbesondere kleineren Messbereich und darüber mit höherer Auflösung möglich sind.

Gemäß einer Ausführungsform können die erste und die zweite Integration einen zeitlichen Abstand aufweisen, so dass ein Integrationstoppzeitpunkt der ersten Integration vor oder an dem Schaltzeitpunkt der betreffenden Phasenspannung und ein Integrationsstartzeitpunkt der zweiten Integration an oder nach dem Schaltzeitpunkt der betreffenden Phasenspannung liegt.

Es kann vorgesehen sein, dass der Integrationstoppzeitpunkt der ersten Integration und der Integrationsstartzeitpunkt der zweiten Integration den gleichen zeitlichen Abstand zu dem Schaltzeitpunkt der betreffenden Phasenspannung aufweisen.

Weiterhin kann der Integrationswert nach der zweiten Zeitdauer und vor dem Beginn der ersten Zeitdauer auf einen vorbestimmten Referenzwert zurückgesetzt werden.

Gemäß einer weiteren Ausführungsform können die erste und die zweite Integration durchgeführt werden, indem von dem Integrationsstartzeitpunkt der ersten Integration bis zu dem Integrationstoppzeitpunkt der zweiten Integration kontinuierlich integriert wird, wobei die Sternpunktpotenzialangabe basierend auf einem Integratorwert zu einem Integrationstoppzeitpunkt der ersten Integration, d.h. nach bzw. am Ende der ersten Zeitdauer, und einem Integratorwert basierend auf einem Integratorwert zu einem Integrationstoppzeitpunkt der zweiten Integration, d.h. nach bzw. am Ende der zweiten Zeitdauer, bestimmt wird.

Gemäß einer alternativen Ausführungsform können sich die erste und die zweite Integration aneinander anschließen, so dass ein Integrationstoppzeitpunkt der ersten Integration und ein Integrationsstartzeitpunkt der zweiten Integration identisch sind.

Es kann vorgesehen sein, dass das Produkt der ersten Zeitdauer und einem Integrationsfaktor der ersten Integration und das Produkt der zweiten Zeitdauer und einem Integrationsfaktor der zweiten Integration gleich sind.

Gemäß einem weiteren Aspekt ist eine Läuferlage-Erfassungseinheit zum sensorlosen Bestimmen einer Läuferlage einer elektronisch kommutierten elektrischen Maschine mit in Sternpunktschaltung verschalteten Phasensträngen vorgesehen, wobei die Phasenstränge der elektrischen Maschine mit Hilfe von getakteten Spannungen angesteuert werden, um Phasenspannungen an die Phasenstränge anzulegen, wobei sich Spannungen an den Phasensträngen zu bestimmten Schaltzeitpunkten sprunghaft ändern, wobei die Läuferlage-Erfassungseinheit ausgebildet ist, um :

- für mindestens zwei Phasenstränge, insbesondere für jeden Phasenstrang eine Sternpunktpotenzialangabe basierend auf einer ersten Integration für eine erste Zeitdauer vor dem Schaltzeitpunkt der Phasenspannung an dem betreffenden Phasenstrang und auf einer zweiten Integration für eine zweite Zeitdauer nach dem Schaltzeitpunkt der Phasenspannung an dem betreffenden Phasenstrang zu bestimmen; und
- eine Transformation abhängig von den Sternpunktpotenzialangaben für jeden der Phasenstränge durchzuführen, um die Läuferlage zu erhalten.

Weiterhin kann die Einrichtung einen Integrator zur Durchführung der ersten und der zweiten Integration oder einen ersten Integrator für die erste Integration und einen zweiten Integrator für die zweite Integration aufweisen. Insbesondere kann die Einrichtung eine Kombination mehrerer in Serie oder auch parallel geschalteter Integrator-Stufen zur Steigerung der Messsignalgüte bzw. zur Erhöhung der Funktionssicherheit mittels Redundanz aufweisen.

Gemäß einem weiteren Aspekt ist ein Motorsystem vorgesehen, umfassend:

- eine elektrische Maschine mit in Sternpunktschaltung verschalteten Phasensträngen
- Eine Ansteuereinheit, die ausgebildet ist, um die Phasenstränge mit Hilfe von getakteten Spannungen anzusteuern, um Phasenspannungen an die Phasenstränge anzulegen, wobei sich Spannungen an den Phasensträngen zu bestimmten Schaltzeitpunkten sprunghaft ändern;
- die obige Läuferlage-Erfassungseinheit.

Kurzbeschreibung der Zeichnungen

Ausführungsformen werden nachfolgend anhand der beigefügten Zeichnungen näher erläutert. Es zeigen:

Figur 1    eine schematische Darstellung eines Motorsystems mit einer elektrischen Maschine und einer Rotorlage-Erfassung;

Figur 2    eine schematische Darstellung von Signalverläufen eines Messsignals, eines Rücksetzsignals für den Integrator, eines Integratorausgangssignals (Integratorwert) und der Messzeitpunkte für eine erste Ausführungsform; und

Figur 3    eine schematische Darstellung von Signalverläufen eines Messsignals, eines Rücksetzsignals für den Integrator, eines Integratorausgangssignals (Integratorwert) und der Messzeitpunkte für eine weitere Ausführungsform.

Beschreibung von Ausführungsformen

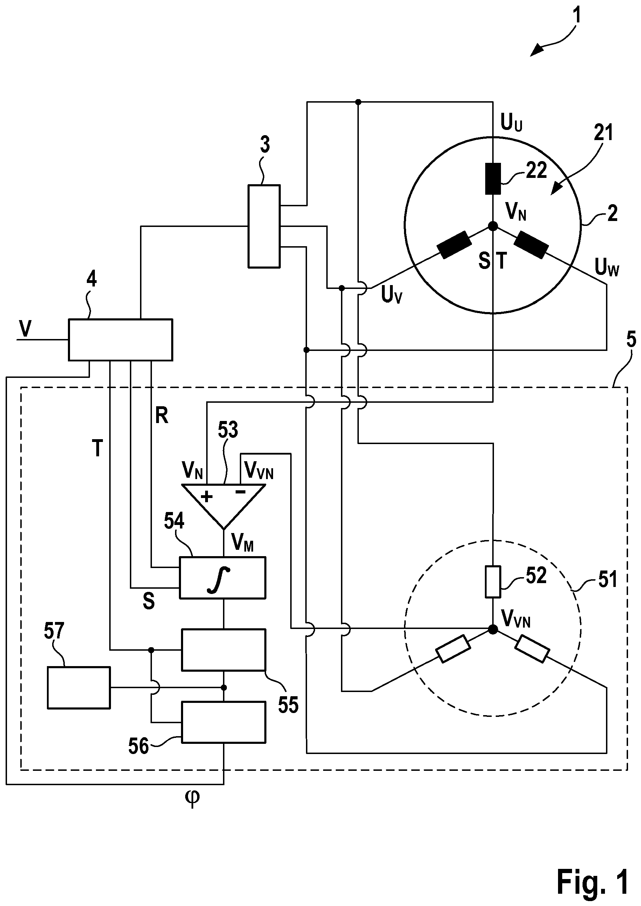

Figur 1 zeigt eine schematische Darstellung eines Motorsystems 1 mit einer elektronisch kommutierten elektrischen Maschine 2, die als elektrisches Ersatzschaltbild dargestellt ist. Die elektronisch kommutierte elektrische Maschine 2 ist beispielhaft und typisch als dreiphasige Maschine dargestellt, jedoch kann dieses Verfahren allgemein auch auf elektrische Maschinen mit zwei oder mehr als drei Phasen angewendet werden. Insbesondere kann die elektronisch kommutierte elektrische Maschine 2 als eine Synchronmaschine, oder als eine Asynchronmaschine oder eine Reluktanzmaschine ausgebildet sein.

Die elektrische Maschine 2 weist eine Statorwicklung 21 auf, die als Sternpunktschaltung verschaltet ist. Die Statorwicklung 21 weist Phasenstränge 22 auf, die jeweils mit einem Anschluss mit einem Sternpunkt ST und einem entsprechenden anderen Anschluss mit einer Leistungselektronik 3 verbunden sind. Die Leistungselektronik 3 stellt zum Ansteuern der elektrischen Maschine Phasenspannungen $U_U$, $U_V$, $U_W$ zur Verfügung.

Die Leistungselektronik 3 kann dazu beispielsweise (nicht gezeigte) Brückenschaltungen (sog. Inverterschaltungen) aufweisen, die es ermöglichen, an die Phasenstränge 22 jeweils ein erstes oder ein zweites vorgegebenes Spannungspotenzial anzulegen, die in der Regel den Versorgungspotenzialen entsprechen. Dazu wird die Leistungselektronik 3 von einer Ansteuereinheit 4 angesteuert. Die gewünschten Phasenspannungen $U_U$, $U_V$, $U_W$ werden jeweils durch ein pulsweitenmoduliertes Signal erzeugt, das der Leistungselektronik 3 bereitgestellt wird. Die entsprechende Phasenspannung $U_U$, $U_V$, $U_W$ ergibt sich aus der Differenz zwischen dem ersten und zweiten Spannungspotenzial und dem der Leistungselektronik für jeden Phasenstrang 22 vorgegebenen pulsweitenmodulierten Signal. Das pulsweitenmodulierte Signal zum Generieren der jeweiligen Phasenspannung $U_U$, $U_V$, $U_W$ wird durch ein Tastverhältnis bestimmt, das basierend auf einer von extern bereitgestellten Vorgabegröße V, die beispielsweise eine Angabe zu einer Soll-Motorleistung oder zu einem Soll-Motormoment sein kann, bestimmt wird. Allgemein gibt das Tastverhältnis einer Pulsweitenmodulation ein Verhältnis einer Zeitdauer, während der die Phasenspannung an den Phasenanschluss angelegt werden soll, zu einer vorgegebenen konstanten Zykluszeit der Pulsweitenmodulation an.

Die Ansteuereinheit 4 generiert das Ansteuermuster für die Leistungselektronik 3 basierend auf der Vorgabegröße V und einer Angabe über eine Läuferlage $\varphi$ der elektrischen Maschine 2. Die Läuferlage $\varphi$ lässt sich in erster Näherung als elektrische Läuferlage $\varphi_{el}$ interpretieren. Die elektrische Läuferlage $\varphi_{el}$ entspricht einer mechanischen Läuferlage (eine Umdrehung des Läufers entspricht 360°) dividiert durch die Polpaarzahl des Läufers. Tatsächlich entspricht die mit dem beschriebenen Verfahren bestimmte Läuferlage $\varphi$ der Ausrichtung des magnetischen Gesamtflusses der elektronisch kommutierten elektrischen Maschine. Je nach spezifischem Maschinendesign sowie der Material- und Fertigungstoleranzen können Abweichungen zwischen $\varphi$ und $\varphi_{el}$ auftreten.

Die Läuferlage $\varphi$ wird in einer Läuferlage-Erfassungseinheit 5 ermittelt. Die Läuferlage-Erfassungseinheit 5 weist eine virtuelle Sternpunktschaltung 51 auf, die ein im Sternpunkt verschaltetes Widerstandsnetzwerk aus rein ohmschen Widerständen 52 aufweist. Widerstände des Widerstandsnetzwerks sind vorzugsweise gleich. Die von der Leistungselektronik 3 generierten Phasenspannungen $U_U$, $U_V$, $U_W$ werden parallel zu den Phasensträngen 22 an die äußeren Anschlüsse der virtuellen Sternpunktschaltung 51 angelegt, so dass sich ein virtuelles Sternpunktpotenzial $V_{VN}$ durch das ohmsche Widerstandsnetzwerk ergibt.

Es wird nun kontinuierlich ein Messsignal $V_M = V_N - V_{VN}$ als Differenz aus dem Sternpunktpotenzial $V_N$ der Statorwicklung der elektrischen Maschine 2 und dem Sternpunktpotenzial $V_{VN}$ des virtuellen Sternpunkts 51 in einem Differenzglied 53 ermittelt. Diese Differenzbildung ist optional und es kann auch das Sternpunktpotenzial $V_N$ der Statorwicklung für die weitere Signalverarbeitung verwendet werden. Die Differenzbildung dient der Reduzierung der resultierenden Spannung, so dass eine Verarbeitung mithilfe des nachfolgenden Integrators in einfacherer Weise durch elektronische Bauteile realisiert werden kann.

Das Messsignal $V_M$ wird einem Integrator 54 zugeführt. Im vorliegenden Ausführungsbeispiel ist der Integrator 54 als analoger Integrator ausgeführt, kann jedoch auch nach vorheriger Digitalisierung des Messsignals $V_M$ als digitaler Integrator, insbesondere als zeitlich getakteter Zähler (mit einer Taktung, die deutlich über der Frequenz der Pulsweitenmodulation liegt), ausgebildet sein.

Die Integration in dem Integrator 54 erfolgt synchronisiert zu Schaltvorgängen, die die Leistungselektronik 3 entsprechend den von der Ansteuereinheit 4 bereitgestellten pulsweitenmodulierten Signalen vornimmt, um die Phasenspannungen $U_U$, $U_V$, $U_W$ zu erzeugen. Basierend auf dem in der Ansteuereinheit 4 bestimmten Pulsmuster und der Zyklusdauer der Pulsweitenmodulation kann die Ansteuereinheit 4 zusätzlich ein Integrationsstartsignal S und ein Rücksetzsignal R an den Integrator 54 bereitstellen. Mit Hilfe des Integrationsstartsignals S kann die Integration in dem Integrator 54 gestartet und gestoppt werden, mit Hilfe des Rücksetzsignals R kann der Integrator 54 gestoppt und auf ein Referenzpotenzial bzw. einen Referenzwert, wie z.B. 0 Volt oder Null, zurückgesetzt werden. Weiterhin wird ein Messzeitpunktsignal T bereitgestellt, dass die Übernahme des zu dem dadurch angegebenen Zeitpunkt bestehenden Integratorwerts zur Digitalisierung und Übernahme in die Läuferlage-Einheit 56 bestimmt.

Der Integratorwert zu einem vorgegebenen Messzeitpunkt entspricht einer Sternpunktpotentialangabe für einen bestimmten Phasenstrang 22. Der laufende Integrationswert des Integrators 54 wird einem Analog-Digital-Wandler 55 zugeführt. Die im Integrator 54 ermittelten digitalisierten Messwerte werden einer Läuferlage-Einheit 56 zugeführt. Am Ausgang des Integrators 54 liegt jederzeit der momentane Integrationswert an, so dass dieser z.B. bestimmt durch das Messzeitpunktsignal T in der Analog-Digital-Wandlereinheit 55 digitalisiert werden kann.

Die Läuferlage-Einheit 56 stellt nach der Auswertung der Sternpunktpotentialangaben für jeden der Phasenstränge 22 eine Angabe über die in der Läuferlage-Ermittlungseinheit 5 ermittelten Läuferlage $\varphi$ zur Verfügung.

Zur Ermittlung der Läuferlage $\varphi$ in der Läuferlage-Einheit 56 ist es notwendig, die Sternpunktpotenzialangaben für Schaltvorgänge für jeden der Phasenstränge zu erfassen, indem eine Auswertung durchgeführt wird, die zeitlich auf einen Schaltzeitpunkt der Phasenspannung an dem dem Phasenstrang 22 zugeordneten Phasenanschluss bezogen ist. Die nutzbaren Schaltvorgänge entsprechen Schaltvorgängen zwischen einem Schaltzustand, bei dem keiner der Phasenstränge an die Phasenspannung angeschlossen wird, zu einem Schaltzustand, bei dem genau derjenige der Phasenstränge an die Phasenspannung angeschlossen wird, für den eine Sternpunktpotenzialangabe erhalten werden soll. Da die Zeitpunkte des entsprechenden Schaltvorgangs für jede der Phasenspannungen $U_U$, $U_V$, $U_W$ in der Ansteuereinheit 4 bekannt sind, kann diese ein entsprechendes Integrationsstartsignal S zum Starten der Integration generieren und durch das Messzeitpunktsignal T das Auslesen des Integratorwerts und die entsprechende Weiterverarbeitung veranlassen.

Die Sternpunktpotenzialangaben werden für nahe beieinanderliegende Schaltzeitpunkte bestimmt, insbesondere für Schaltzeitpunkte in aufeinanderfolgenden Zyklen der Pulsweitenmodulation.

In einer alternativen Ausführungsform können anstelle eines Integrators auch zwei Integratoren, die entsprechend die erste und die zweite Integration separat durchführen können, vorgesehen sein. Dies ermöglicht eine einfachere Initialisierung des zu Beginn der jeweiligen Integration vorliegenden Startwerts bzw. ein einfacheres Rücksetzen, da dieses bei hohen Ansteuerfrequenzen nicht länger zeitkritisch ist.

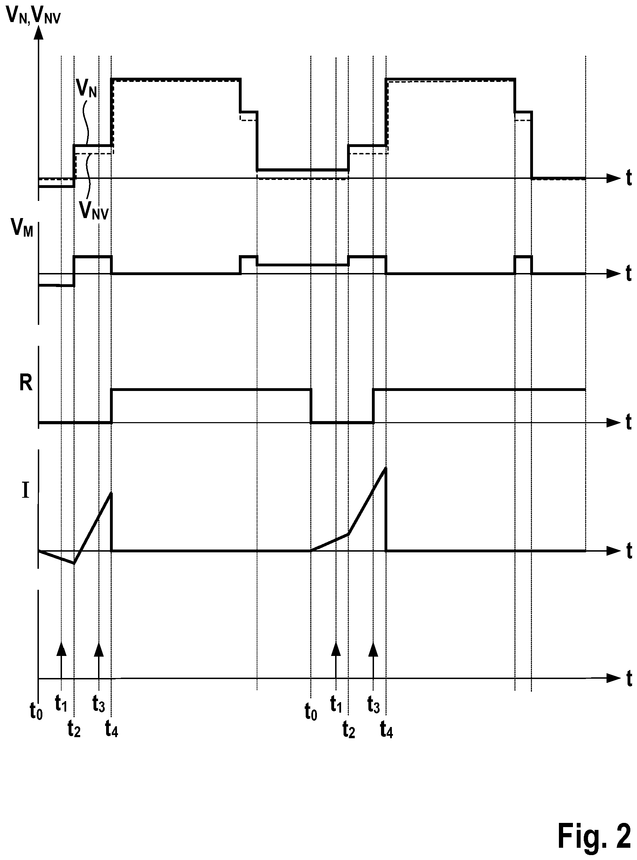

In Figur 2 sind die Signalverläufe des Messsignals VM, des Rücksetzsignals R (1 für Rücksetzen, 0 für Integrieren) für den Integrator 54, eines Integratorausgangssignals (Integratorwert) und der Messzeitpunkte für den ersten und den zweiten Integratorwert angegeben.

Die entsprechenden den Phasensträngen zugeordneten Sternpunktpotenzialangaben werden für jeden der Phasenstränge der elektrischen Maschine 2 separat ermittelt. Dazu signalisiert die Ansteuereinheit 4 zu einem Integrationsstartzeitpunkt $t_0$ mit Hilfe des Integrationsstartsignals den Start einer ersten Integration in dem Integrator 54. Die erste Integration erfolgt für eine erste Zeitdauer bis zu einem Integrationsstoppzeitpunkt t1 der ersten Integration, der dem Schaltzeitpunkt $t_2$ entsprechen kann oder zeitlich vor dem Schaltzeitpunkt $t_2$ einer Spannungsänderung für den betreffenden Phasenstrang liegen kann. Somit liegt der Integrationsstartzeitpunkt $t_0$ für die erste Integration mindestens für die erste Zeitdauer vor dem Schaltzeitpunkt $t_2$ der Spannungsänderung an dem betreffenden Phasenstrang 22. Die zweite Integration erfolgt für eine zweite Zeitdauer, die vollständig zeitlich nach dem Schaltzeitpunkt $t_2$ der Spannungsänderung für den betreffenden Phasenstrang 22 liegt. Somit entspricht der Integrationsstartzeitpunkt für die zweite

Integration dem Schaltzeitpunkt $t_2$ oder einem dazu späteren Zeitpunkt.

In der oben beschriebenen Ausführungsform kann die erste und zweite Integration während einer nicht unterbrochenen Integration über den Schaltzeitpunkt $t_2$ hinweg bis zu dem Integrationsstoppzeitpunkt $t_3$ der zweiten Integration durchgeführt werden, der eine vorbestimmte zweite Zeitdauer nach dem Schaltzeitpunkt $t_2$ liegt. Dadurch beginnt die zweite Integration bei einem Integrationsanfangswert, der sich aus dem Integrationswert nach der ersten Integration und der bis zum Schaltzeitpunkt bzw. bis zum Integrationsstartzeitpunkt für die zweite Integration erfolgenden Änderung ergibt. Ein Rücksetzen des Integrators zwischen der ersten Integration und der zweiten Integration wird bei dieser Ausführungsform nicht vorgenommen.

Die Änderung des Integratorwertes zwischen dem Ende der ersten und dem Start der zweiten Integration kann vernachlässigt werden, wenn der zeitliche Abstand zwischen dem Integrationsstoppzeitpunkt t1 der ersten Integration und dem Integrationsstartzeitpunkt der zweiten Integration bzw. dem Schaltzeitpunkt $t_2$ sehr klein gegenüber der gesamten Integrationsdauer der zweiten Integration ist, d.h. vorzugsweise kleiner als 20%, besonders bevorzugt kleiner als 10% oder kleiner als 5%. Dies liegt daran, dass vor und unmittelbar nach dem Schaltvorgang das Sternpunktpotenzial nur einen relativ geringen Betrag aufweist und so das Ergebnis der Integration nur in geringem Maße verfälscht.

Bei gleichem Integrationsfaktor der Integration, d.h. der Verstärkung des Integrators, ist es notwendig, dass die erste und zweite Zeitdauer identisch sind. Die erste und die zweite Zeitdauer können auch verschieden gewählt werden, wenn der Integrationsfaktor der ersten und zweiten Integration entsprechend so angepasst sind, dass das Produkt der ersten Zeitdauer und des Integrationsfaktors der ersten Integration dem Produkt der zweiten Zeitdauer und des Integrationsfaktors der zweiten Integration entspricht.

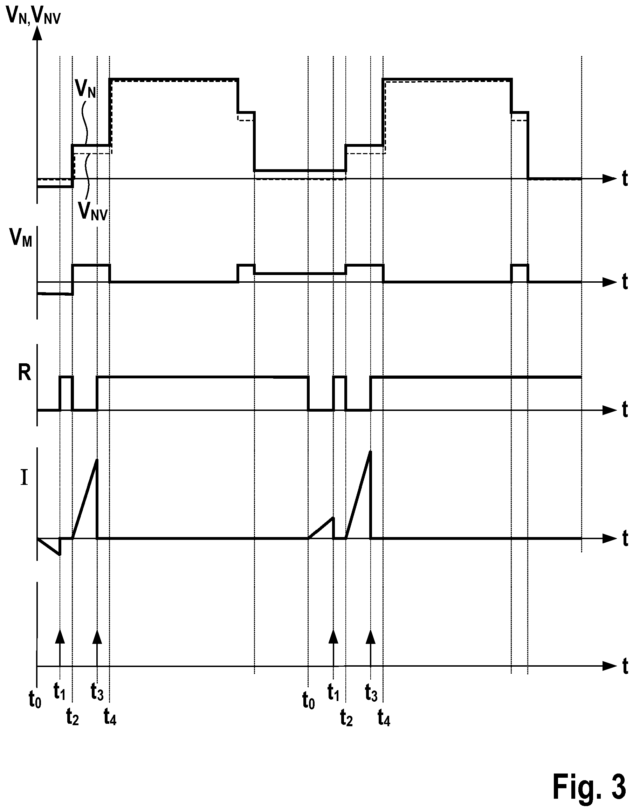

Eine alternative Ausführungsform wird anhand des Signalverlaufs der Figur 3 beschrieben. In Figur 3 sind entsprechend die Signalverläufe des Messsignals VM, des Rücksetzsignals R (1 für Rücksetzen, 0 für Integrieren) für den Integrator 54, des Integratorausgangssignals (Integratorwert) und der Messzeitpunkte für den ersten und den zweiten Integratorwert angegeben. Gemäß der alternativen Ausführungsform können die erste Zeitdauer der ersten Integration vor dem Schaltzeitpunkt und die zweite Zeitdauer der zweiten Integration nach dem Schaltzeitpunkt zeitlich beabstandet sein. Vorzugsweise können die erste und die zweite Zeitdauer symmetrisch um den Schaltzeitpunkt angeordnet sein. Zum Ende der ersten Zeitdauer kann die erste Integration gestoppt werden und der Integrationswert zurückgesetzt (wie durch den Verlauf des Integratorwerts angegeben) oder mit einem bestimmten Wert beschrieben oder beibehalten werden. Es ist lediglich erforderlich, dass die während der zweiten Zeitdauer erfolgte Änderung des Integrationswerts ermittelbar ist.

Zum oder nach dem Schaltzeitpunkt $t_2$ wird nun die zweite Integration mit dem im Integrator gespeicherten Integrationswert erneut gestartet. Auf diese Weise ist es möglich, den Einfluss des Einschwingverhaltens des Sternpunktpotenzials aufgrund von Kapazitäten in der Leistungselektronik 3 mit Leitungsinduktivitäten in der Integration nicht zu berücksichtigen. Grundsätzlich können die zeitlichen Abstände des Integrationsstoppzeitpunkts der ersten Integration und des Integrationsstartzeitpunkts der zweiten Integration verschieden gewählt werden.

Nach dem Start der Integration wird ein erster Integrationswert $u_0$, $v_0$, $w_0$ durch die Analog-Digital-Wandlereinheit 55 zum Schaltzeitpunkt $t_1$ oder zu einem wählbaren Zeitpunkt zwischen dem Integrationsstoppzeitpunkt der ersten Integration und dem Integrationsstartzeitpunkt der zweiten Integration erfasst und ein zweiter Integrationswert $u_1$, $v_1$, $w_1$ zum oder nach dem Ende der zweiten Zeitdauer, d.h. zu dem Integrationsstoppzeitpunkt der zweiten Integration oder danach. Es ergeben sich Integrationswerte wie folgt:

$$u_0 = \int_{t_0}^{t_1} (V_N - V_{VN})\, dt; \quad u_1 = \int_{t_2}^{t_3} (V_N - V_{VN})\, dt$$

$$v_0 = \int_{t_0}^{t_1} (V_N - V_{VN})\, dt; \quad v_1 = \int_{t_2}^{t_3} (V_N - V_{VN})\, dt$$

$$w_0 = \int_{t_0}^{t_1} (V_N - V_{VN})\, dt; \quad w_1 = \int_{t_2}^{t_3} (V_N - V_{VN})\, dt$$

wobei $t_1$ dem Integrationstoppzeitpunkt der ersten Integration entspricht, der dem Schaltzeitpunkt $t_2$ entsprechen kann oder zeitlich vor diesem liegt.

Die resultierenden Sternpunktpotenzialangaben u, v, w entsprechen dann:

$$u = u_1 - u_0$$

$$v = v_1 - v_0$$

$$w = w_1 - w_0$$

Wird kontinuierlich während der ersten und der zweiten Integrationsdauer integriert, ohne dass vor der zweiten Integration der Integratorwert zurückgesetzt wird, gilt:

$$u_0 = \int_{t_0}^{t_1} (V_N - V_{VN})\, dt; \quad u_1 = \int_{t_0}^{t_3} (V_N - V_{VN})\, dt$$

$$v_0 = \int_{t_0}^{t_1} (V_N - V_{VN})\, dt; \quad v_1 = \int_{t_0}^{t_3} (V_N - V_{VN})\, dt$$

$$w_0 = \int_{t_0}^{t_1} (V_N - V_{VN})\, dt; \quad w_1 = \int_{t_0}^{t_3} (V_N - V_{VN})\, dt$$

und

$$u = u_1 - 2u_0$$

$$v = v_1 - 2v_0$$

$$w = w_1 - 2w_0$$

Die Läuferlage-Einheit 56 ermittelt basierend auf den Sternpunktpotenzialangaben u, v, w für die Schaltzeitpunkte für jeden Phasenstrang mit Hilfe einer an sich bekannten Clarke-Transformation die gewünschte Läuferlage. Die Läuferlage kann auch durch einfache Vektoraddition in die elektrische Läuferlage umgerechnet werden, wobei die Länge der Vektoren jeweils durch die Sternpunktpotentialangaben und durch die Richtung des Magnetfelds bestimmt ist, das sich durch die Bestromung des der jeweiligen Sternpunktpotentialangabe zugeordneten Phasenstrangs resultiert. Da lediglich der Winkel, und nicht der Betrag des resultierenden Vektors verwendet wird, ist die tatsächliche absolute Größe der Sternpunktpotenzialangaben bzw. die zeitliche Länge der ersten bzw. zweiten Zeitdauer für das Ergebnis nicht relevant.

Jedoch bestimmt die Wahl der Lage relativ zum betreffenden Schaltzeitpunkt und der zeitlichen Länge der ersten bzw. zweiten Zeitdauer maßgeblich den Ansteuerbereich, in dem die Läuferlage während des Betriebes der elektrischen Maschine 2 ermittelt werden kann. Da bei einem Tastverhältnis von 100% sich unter Umständen für einen Läuferlagebereich kein Schaltvorgang einer Phasenspannung ergibt, der für die Ermittlung der Sternpunkt-Potenzialangabe benötigt wird, kann eine Läuferlage bei einem Tastverhältnis von 100% in der Regel nicht zuverlässig ermittelt werden. Durch Verringern der ersten bzw. zweiten Zeitdauer kann jedoch das obige Verfahren für Tastverhältnisse sehr nahe an 100% angewendet werden, wenn die erste bzw. zweite Zeitdauer entsprechend klein gewählt werden. Unter Umständen können die erste und die zweite Zeitdauer abhängig von dem bereitgestellten Tastverhältnis gewählt werden, und umso kleiner gewählt werden, je näher das Tastverhältnis an 100% liegt.

Durch die integrative Bestimmung der Sternpunktpotenzialangaben kann eine erhebliche Signalglättung erreicht werden, die sich bei der mit Hilfe der Clarke-Transformation bestimmten Läuferlage entsprechend glättend auswirkt.

**Patentansprüche**

1.  Verfahren zum sensorlosen Bestimmen einer Läuferlage einer elektronisch kommutierten elektrischen Maschine (2) mit in Sternpunktschaltung verschalteten Phasensträngen, mit folgenden Schritten:

    - Ansteuern der Phasenstränge (22) der elektrischen Maschine (2) mit Hilfe von getakteten Spannungen, um Phasenspannungen an die Phasenstränge (22) anzulegen, wobei sich Spannungen an den Phasensträngen (22) zu bestimmten Schaltzeitpunkten sprunghaft ändern;
    - für mindestens zwei der Phasenstränge (22), insbesondere für jeden Phasenstrang, Bestimmen einer Sternpunktpotenzialangabe basierend auf einer ersten Integration für eine erste Zeitdauer vor dem Schaltzeitpunkt der Phasenspannung an dem betreffenden Phasenstrang (22) und auf einer zweiten Integration für eine zweite Zeitdauer nach dem Schaltzeitpunkt der Phasenspannung an dem betreffenden Phasenstrang (22);
    - Durchführen einer Transformation abhängig von den Sternpunktpotenzialangaben für jeden der Phasenstränge (22), um die Läuferlage zu erhalten.

2.  Verfahren nach Anspruch 1, wobei die Phasenstränge (22) jeweils mithilfe eines pulsweitenmodulierten Signals angesteuert werden.

3.  Verfahren nach Anspruch 2, wobei die erste Zeitdauer und die zweite Zeitdauer abhängig von einem Tastverhältnis des pulsweitenmodulierten Signals gewählt wird.

4.  Verfahren nach Anspruch 2 oder 3, wobei die Schaltzeitpunkte für das Bestimmen der jeweiligen Sternpunktpotenzialangabe denjenigen Schaltzeitpunkten entsprechen, zu denen von einem Schaltzustand, bei dem keiner der Phasenstränge (22) an die Phasenspannung angeschlossen wird, zu einem Schaltzustand, bei dem genau einer der Phasenstränge (22) an die Phasenspannung angeschlossen wird, geschaltet wird.

5.  Verfahren nach einem der Ansprüche 1 bis 4, wobei bei der ersten und der zweiten Integration eine Differenzspannung zwischen dem Sternpunktpotential der Sternpunktschaltung und einem virtuellen Sternpunktpotenzial einer virtuellen Sternpunktschaltung integriert wird, wobei insbesondere die virtuelle Sternpunktschaltung einer Sternpunktschaltung von identischen ohmschen Widerständen entspricht.

6.  Verfahren nach einem der Ansprüche 1 bis 5, wobei die erste und die zweite Integration einen zeitlichen Abstand aufweisen, so dass ein Integrationstoppzeitpunkt der ersten Integration vor oder an dem Schaltzeitpunkt der betreffenden Phasenspannung und ein Integrationsstartzeitpunkt der zweiten Integration an oder nach dem Schaltzeitpunkt der betreffenden Phasenspannung liegt.

7.  Verfahren nach Anspruch 6, wobei der Integrationstoppzeitpunkt der ersten Integration und der Integrationsstartzeitpunkt der zweiten Integration den gleichen zeitlichen Abstand zu dem Schaltzeitpunkt der betreffenden Phasenspannung aufweisen.

8.  Verfahren nach einem der Ansprüche 6 bis 7, wobei der Integrationswert nach der zweiten Zeitdauer und vor dem Beginn der ersten Zeitdauer auf einen vorbestimmten Referenzwert zurückgesetzt wird.

9.  Verfahren nach Anspruch 6 oder 7, wobei die erste und die zweite Integration durchgeführt werden, indem von dem Integrationsstartzeitpunkt der ersten Integration bis zu dem Integrationstoppzeitpunkt der zweiten Integration kontinuierlich integriert wird, wobei die Sternpunktpotenzialangabe basierend auf einem Integratorwert zu einem Integrationstoppzeitpunkt der ersten Integration und einem Integratorwert zu einem Integrationstoppzeitpunkt der zweiten Integration bestimmt wird.

10. Verfahren nach Anspruch 9, wobei die erste und die zweite Integration sich aneinander anschließen, so dass ein Integrationstoppzeitpunkt der ersten Integration und ein Integrationsstartzeitpunkt der zweiten Integration identisch sind.

11. Verfahren nach einem der Ansprüche 1 bis 8, wobei das Produkt der ersten Zeitdauer und eines Integrationsfaktors der ersten Integration und das Produkt der zweiten Zeitdauer und eines Integrationsfaktors der zweiten Integration gleich sind.

12. Läuferlage-Erfassungseinheit (5) zum sensorlosen Bestimmen einer Läuferlage einer elektronisch kommutierten elektrischen Maschine (2) mit in Sternpunktschaltung verschalteten Phasensträngen (22), wobei die Phasenstränge (22) der elektrischen Maschine (2) mit Hilfe von getakteten Spannungen angesteuert werden, um Phasenspannungen an die Phasenstränge (22) anzulegen, wobei sich Spannungen an den Phasensträngen (22) zu bestimmten Schaltzeitpunkten sprunghaft ändern, umfassend:

- eine Einrichtung, die ausgebildet ist, um für mindestens zwei der Phasenstränge, insbesondere für jeden Phasenstrang eine Sternpunktpotenzialangabe basierend auf einer ersten Integration für eine erste Zeitdauer vor dem Schaltzeitpunkt der Phasenspannung an dem betreffenden Phasenstrang und auf einer zweiten Integration für eine zweite Zeitdauer nach dem Schaltzeitpunkt der Phasenspannung an dem betreffenden Phasenstrang zu bestimmen; und
- eine Läuferlage-Einheit (56), die ausgebildet ist, um eine Transformation abhängig von den Sternpunktpotenzialangaben für jeden der Phasenstränge (22) durchzuführen, um die Läuferlage zu erhalten.

13. Läuferlage-Erfassungseinheit (5) nach Anspruch 12, wobei die Einrichtung einen Integrator (54) zur Durchführung der ersten und der zweiten Integration oder einen ersten Integrator für die erste Integration und einen zweiten Integrator für die zweite Integration aufweist.

14. Motorsystem (1) umfassend:

- eine elektrische Maschine (2) mit in Sternpunktschaltung verschalteten Phasensträngen (22);
- eine Ansteuereinheit (4), die ausgebildet ist, um die Phasenstränge (22) mit Hilfe von getakteten Spannungen anzusteuern, um Phasenspannungen an die Phasenstränge (22) anzulegen, wobei sich Spannungen an den Phasensträngen (22) zu bestimmten Schaltzeitpunkten sprunghaft ändern;
- eine Läuferlage-Erfassungseinheit (5) nach Anspruch 12 oder 13.

## Claims

1. A method for sensorless determination of a rotor position of an electronically commutated electrical machine (2) with phase strings connected in a star point circuit, having the following steps of :

- driving the phase strings (22) of the electrical machine (2) with the aid of clocked voltages in order to apply phase voltages to the phase strings (22), wherein the voltages on the phase strings (22) change abruptly at specific switching times;
- for at least two of the phase strings (22), in particular for each phase string, determining a star point potential value based on a first integration for a first period of time before the switching time of the phase voltage at the respective phase string (22) and on a second integration for a second period of time after the switching time of the phase voltage at the respective phase string (22);
- performing a transformation depending on the neutral point potential data for each of the phase strings (22) to obtain the rotor position.

2. The method according to claim 1, wherein the phase strings (22) are each driven by means of a pulse width modulated signal.

3. The method according to claim 2, wherein the first period of time and the second period of time are selected depending on a duty cycle of the pulse width modulated signal.

4. The method according to claim 2 or 3, wherein the switching times for determining the respective star point potential correspond to those switching times at which switching takes place from a switching state in which none of the phase strings (22) is connected to the phase voltage to a switching state in which exactly one of the phase strings (22) is connected to the phase voltage.

5. The method according to any one of claims 1 to 4, wherein in the first and the second integration a differential voltage between the star point potential of the star point circuit and a virtual star point potential of a virtual star point circuit is integrated, wherein in particular the virtual star point circuit corresponds to a star point circuit of identical ohmic resistors.

6. The method according to any one of claims 1 to 5, wherein the first and the second integration have a timely distance such that an integration stop time of the first integration is before or at the switching time of the corrresponding phase voltage and an integration start time of the second integration is at or after the switching time of the corresponding phase voltage.

7. The method according to claim 6, wherein the integration stop time of the first integration and the integration start time of the second integration have the same timely distance to the switching time of the corresponding phase voltage.

8. The method according to any one of claims 6 to 7, wherein the integration value is reset to a predetermined reference value after the second period of time and before the start of the first period of time.

9. The method of claim 6 or 7, wherein the first and second integrations are performed by integrating continuously from the integration start time of the first integration to the integration stop time of the second integration, wherein the star point potential value is determined based on an integrator value at an integration stop time of the first integration and an integrator value at an integration stop time of the second integration.

10. The method of claim 9, wherein the first integration and the second integration are contiguous such that an integration stop time of the first integration and an integration start time of the second integration are identical.

11. The method of any one of claims 1 to 8, wherein the product of the first period of time and an integration factor of the first integration and the product of the second period of time and an integration factor of the second integration are identical.

12. A rotor position detection unit (5) for sensorless determination of a rotor position of an electronically commutated electric machine (2) having phase strings (22) connected in a star-point circuit, the phase strings (22) of the electric machine (2) being driven with the aid of clocked voltages in order to apply phase voltages to the phase strings (22), wherein voltages on the phase strings (22) change abruptly at specific switching times, comprising:

- means adapted to determine for at least two of the phase strings, in particular for each phase string, a neutral point potential indication based on a first integration for a first period of time before the switching time of the phase voltage on the respective phase string and on a second integration for a second period of time after the switching time of the phase voltage on the respective phase string; and
- a rotor position unit (56) adapted to perform a transformation depending on the star point potential values for each of the phase strings (22) to obtain the rotor position.

13. The rotor position detection unit (5) according to claim 12, wherein the device comprises an integrator (54) for performing the first and the second integration or a first integrator for the first integration and a second integrator for the second integration.

14. A motor system (1) comprising:

- an electric machine (2) with phase strings (22) connected in a star-point circuit;
- a drive unit (4) configured to drive the phase strings (22) using clocked voltages to apply phase voltages to the phase strings (22), wherein voltages on the phase strings (22) change abruptly at certain switching times;
- a rotor position detection unit (5) according to claim 12 or 13.

**Revendications**

1. Procédé de détermination sans capteur d'une position de rotor d'une machine électrique (2) à commutation électronique ayant des conducteurs de phase branchés en un circuit en étoile, comprenant les étapes suivantes :

- excitation des conducteurs de phase (22) de la machine électrique (2) à l'aide de tensions cadencées afin d'appliquer des tensions de phase aux conducteurs de phase (22), les tensions au niveau des conducteurs de phase (22) changeant brusquement à des instants de commutation déterminés ;
- pour au moins deux des conducteurs de phase (22), notamment pour chaque conducteur de phase, détermination d'une indication de potentiel de point neutre en se basant sur une première intégration pendant une première durée avant l'instant de commutation de la tension de phase au niveau du conducteur de phase (22) concerné et sur une deuxième intégration pendant une deuxième durée après l'instant de commutation de la tension de phase au niveau du conducteur de phase (22) concerné ;
- réalisation d'une transformation en fonction des indications de potentiel de point neutre pour chacun des conducteurs de phase (22) afin d'obtenir la position de rotor.

2. Procédé selon la revendication 1, les conducteurs de phase (22) étant respectivement excités à l'aide d'un signal modulé en largeur d'impulsion.

3. Procédé selon la revendication 2, la première durée et la deuxième durée étant choisies en fonction d'un rapport cyclique du signal modulé en largeur d'impulsion.

4. Procédé selon la revendication 2 ou 3, les instants de commutation pour la détermination de l'indication de potentiel de point neutre respective correspondant aux instants de commutation auxquels est effectuée une commutation d'un état de commutation dans lequel aucun des conducteurs de phase (22) n'est raccordé à la tension de phase vers un état de commutation dans lequel exactement un conducteur de phase (22) est raccordé à la tension de phase.

5. Procédé selon l'une des revendications 1 à 4, une tension différentielle entre le potentiel du point neutre du circuit en étoile et un potentiel de point neutre virtuel d'un circuit en étoile virtuel étant intégrée lors de la première et de la deuxième intégration, le circuit en étoile virtuel correspondant notamment à un circuit en étoile composé de résistances ohmiques identiques.

6. Procédé selon l'une des revendications 1 à 5, la première et la deuxième intégration possédant un écart dans le temps, de sorte qu'un instant d'arrêt d'intégration de la première intégration se situe avant ou à l'instant de commutation de la tension de phase concernée et un instant de début d'intégration de la deuxième intégration se situe à ou après l'instant de commutation de la tension de phase concernée.

7. Procédé selon la revendication 6, l'instant d'arrêt d'intégration de la première intégration et l'instant de début d'intégration de la deuxième intégration présentant le même écart dans le temps par rapport à l'instant de commutation de la tension de phase concernée.

8. Procédé selon l'une des revendications 6 et 7, la valeur d'intégration après la deuxième durée et avant le début de la première durée étant ramenée à une valeur de référence prédéterminée.

9. Procédé selon la revendication 6 ou 7, la première et la deuxième intégration étant effectuées en intégrant continuellement à partir de l'instant de début d'intégration de la première intégration jusqu'à l'instant d'arrêt d'intégration de la deuxième intégration, l'indication de potentiel de point neutre étant déterminée en se basant sur une valeur d'intégrateur à un instant d'arrêt d'intégration de la première intégration et une valeur d'intégrateur à un instant d'arrêt d'intégration de la deuxième intégration.

10. Procédé selon la revendication 9, la première et la deuxième intégration se rattachant l'une à l'autre, de sorte qu'un instant d'arrêt d'intégration de la première intégration et un instant de début d'intégration de la deuxième intégration sont identiques.

11. Procédé selon l'une des revendications 1 à 8, le produit de la première durée et d'un facteur d'intégration de la première intégration et le produit de la deuxième durée et d'un facteur d'intégration de la deuxième intégration étant identiques.

12. Unité d'acquisition de position de rotor (5) destinée à la détermination sans capteur d'une position de rotor d'une machine électrique (2) à commutation électronique ayant des conducteurs de phase (22) branchés en un circuit en étoile, les conducteurs de phase (22) de la machine électrique (2) étant excités à l'aide de tensions cadencées afin d'appliquer des tensions de phase aux conducteurs de phase (22), les tensions au niveau des conducteurs de phase (22) changeant brusquement à des instants de commutation déterminés, comprenant :

- un dispositif qui est configuré pour, pour au moins deux des conducteurs de phase, notamment pour chaque conducteur de phase, déterminer une indication de potentiel de point neutre en se basant sur une première intégration pendant une première durée avant l'instant de commutation de la tension de phase au niveau du conducteur de phase concerné et sur une deuxième intégration pendant une deuxième durée après l'instant de commutation de la tension de phase au niveau du conducteur de phase concerné ; et
- une unité de position de rotor (56), qui est configurée pour réaliser une transformation en fonction des indications de potentiel de point neutre pour chacun des conducteurs de phase (22) afin d'obtenir la position de rotor.

13. Unité d'acquisition de position de rotor (5) selon la revendication 12, le dispositif possédant un intégrateur (54) destiné à effectuer la première et la deuxième intégration ou un premier intégrateur pour la première intégration et un deuxième intégrateur pour la deuxième intégration.

14. Système de moteur (1) comprenant :

- une machine électrique (2) ayant des conducteurs de phase (22) branchés en un circuit en étoile ;
- une unité d'excitation (4) qui est configurée pour exciter les conducteurs de phase (22) à l'aide de tensions cadencées afin d'appliquer des tensions de phase aux conducteurs de phase (22), les tensions au niveau des conducteurs de phase (22) changeant brusquement à des instants de commutation déterminés ;
- une unité d'acquisition de position de rotor (5) selon la revendication 12 ou 13.

**Fig. 1**

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 99009645 A1
- WO 2007073853 A
- EP 2732546 B1
- DE 102004013241 A1

**In der Beschreibung aufgeführte Nicht-Patentliteratur**

- **DRUCKSCHRIFT E. GRASSO et al.** *Analysis of direct flux observation for field-oriented control PMSM,* 2015, 122-127